# EUROPEAN PATENT APPLICATION

(11) **EP 4 530 252 A1**
(43) Date of publication of application: **02.04.2025**
(21) Application number: 23199734.7
(22) Date of filing: 26.09.2023
(51) Int. Cl.: C01B 21/26, B01D 53/56, C01B 21/28, C01B 21/38, C01C 1/04

(54) **SYSTEM FOR THE START-UP AND SHUT-DOWN OF A NITRIC ACID PRODUCTION PLANT AND METHOD OF OPERATING THEREOF**

(71) Applicant: Yara International ASA, 0277 Oslo (NO)
(72) Inventor: De Smet, Andre, 4535 JH Terneuzen (NL)
(74) Representative: De Clercq & Partners

(57) **Abstract**

The present disclosure relates to a nitric acid plant. The nitric acid plant contains, as conventionally, an absorption tower for absorbing NOx gases produced by the plant, which generates nitric acid and a tail gas that is treated in a tail gas treatment unit before being released to the atmosphere. The nitric acid plant is characterised in that it comprises an in-line fuelled burner located downstream the absorption tower and upstream the tail gas treatment unit for heating the tail gas upstream the tail gas treatment unit, before it is expanded in a tail gas turbine and released to the atmosphere. The present disclosure further relates to a method for operating the nitric acid plant of the disclosure.

## Description

### Field of the invention

The invention relates to the field of emission control in the start-up and shut-down of nitric acid production.

### Background

Pure nitric acid is a clear, colorless liquid with a strong odor. Nitric acid is produced in large quantities principally by catalytic oxidation of ammonia (Ostwald process). Ammonia is converted to nitric acid in several stages. The ammonia is first oxidized in an ammonia burner on an ammonia oxidation catalyst and located in a so-called ammonia oxidation burner or ammonia converter, producing nitric oxide (in this disclosure also called nitrogen monoxide (NO)) and water:

4 NH₃ (g) + 5 O₂ (g) -> 4 NO (g) + 6 H₂O (g) (1)

Alongside with nitric oxide, N₂O gases are produced as a side product and are abated, through an N₂O abatement system also located in the ammonia converter, downstream from of the ammonia oxidation catalyst. The reaction product from (1), nitric oxide, following cooling, is then oxidized to nitrogen dioxide (NO₂) and further to dinitrogen tetroxide N₂O₄ (g) in an oxidation section:

2 NO (g) + O₂ (g) → 2 NO₂ (g) (2)

2 NO₂ (g) -> N₂O₄ (g) (3)

Cooling of nitrogen oxide gases is accomplished first through the use of a waste heat recovery system recovering the heat from the conversion of ammonia into nitric oxide, then through the use of a cooler condenser in which condensed nitric acid is separated from nitric oxide, nitrogen dioxide and dinitrogen tetroxide and nitric acid gases, collectively called NOₓ gases, and finally by heating the tail gas released at the outlet of the absorption tower, in a tail gas treatment unit for abating NOₓ and optionally N₂O gases in the tail gas, such that it can be released to the atmosphere, after expansion. By absorption in water, nitrogen dioxide and dinitrogen tetroxide are converted to nitric acid and nitric oxide:

3 NO₂ (g) + H₂O (I) -> 2 HNO₃(aq) + NO(g) (4)

3 N₂O₄ (g) + 2 H₂O (I) -> 4 HNO₃ (aq) + 2 NO (g) (5)

Weak nitric acid which is up to 68 % (azeotrope) is obtained. Through a rectification process the concentration of nitric acid can be increased up to 99 % concentrated nitric acid. The total reaction is given by the following formula:

NH₃ + 2 O₂ → HNO₃ + H₂O (6)

The main process units in a nitric acid production plant, include an ammonia converter (conversion of ammonia into nitric oxides using oxygen over a suitable catalyst), an oxidation section (conversion of nitric oxide into nitrogen dioxide and nitrogen tetroxide), an absorber unit (for the absorption of NOₓ gases into water) and a bleacher unit (removal of unreacted dissolved gases, containing in particular NOₓ and gases, from the aqueous nitric acid solution, which give it its typical brownish color).

The process for the production of nitric acid can be differentiated into a mono-pressure (single-pressure) and dual pressure (split-pressure) process.

In a mono-pressure process, the converter and the absorber unit operate at roughly the same working pressure P1. Such mono-pressure process generally includes low-pressure (2 to 6 bara) and highpressure (from above 6 to 16 bara, in particular 9 to 16 bara) processes.

The drive power for the air compressor typically originates from a tail-gas turbine and a steam turbine or electric motor. Accordingly, the compressor train of mono pressure nitric acid production plant typically comprises an air compressor, a tail-gas turbine, and a steam turbine or electric motor.

A problem encountered in nitric acid production is that during the start-up of the plant, the air circulated in the process and being ventilated, as the tail gas, to the atmosphere, after expansion through the tail-gas turbine, contains NOₓ gases as the plant has typically been used in producing nitric acid previously. Furthermore, also during the shut-down, as the plant has just been used for producing nitric acid, the air circulated in the process and being ventilated as the tail gas to the atmosphere, after expansion through the tail-gas turbine, contains, in particular, NOₓ gases and optionally nitrous oxide (N₂O) gases.

The NOₓ tail gas concentration can be reduced during a shutdown and/or start-up of a nitric acid installation without residual gas purification.

In US4869890A1 (Air Products and Chemicals Inc, 1988), in order to minimise the NOₓ emissions, a series of sequential steps which encompass maximizing pressure, water and air flow to the absorber and adding ammonia upstream from the De-NOₓ treatment unit, is taken.

In WO2003078314A1 (Uhde Gmbh, 2002), in order to achieve reduction of the NOₓ emissions during a shutdown, directly after the interruption of the residual gas purification in the De-NOₓ treatment unit due to a temperature drop, the pressure prevailing in the installation is temporarily maintained and the gas is subsequently expanded in a controlled manner, thinned by air supplied from the exterior and released into the environment.

The present disclosure aims at providing a solution that not only reduces the NOₓ and optionally N₂O emissions in nitric acid production during the start-up and the shut-down of the plant, but also reduces the power demand during the start-up.

### Summary

In one aspect of the disclosure, a production plant for producing nitric acid at reduced power consumption and reduced emissions. The production plant comprises:
- an air compressor providing compressed air;
- a mixing apparatus, for mixing the compressed gas stream with an ammonia gas stream, to produce an ammonia/air gas mixture;
- an ammonia converter, operable at a pressure P1 above atmospheric pressure, for oxidising ammonia in the ammonia/air gas mixture, to produce a NOₓ gas/steam mixture comprising water and nitric oxide;
- a gas cooler/condenser downstream from the ammonia converter, to produce from the NOₓ gas/steam mixture an aqueous diluted nitric acid mixture and a gaseous NOₓ stream;
- an absorption tower, downstream from the gas cooler/condenser, for absorbing the NOₓ gases from the gaseous NOₓ stream in water, to produce a stream of nitric acid containing residual NOₓ gas and a tail gas comprising NOₓ gases, comprising an absorption tower tail gas outlet for evacuating the tail gas;
- a tail gas heater, positioned upstream from the gas cooler/condenser, for heating a tail gas stream with the heat generated inside the ammonia converter;
- a tail gas treatment unit located downstream from the tail gas heater, for treating NOₓ gases and nitrous oxide gases;
- a tail gas expander for expanding the tail gas downstream from the tail gas treatment unit down to about atmospheric pressure, the tail gas expander being suitable for providing power to the air compressor; and
- additional means for providing power the air compressor;.

The production plant is characterised in that it further comprises:
- an in-line fuelled burner located downstream from the absorption tower and upstream from the tail gas treatment unit for heating the gas upstream from the tail gas treatment unit.

The inventor has realised that, even though the plant is not in operation and the temperature of the tail gas therefore is reduced compared to when NOₓ gases are being produced, if the gas leaving the absorption tower during the start-up or the shut-down is heated in an in-line burner before entering the tail gas treatment unit, tail gas treatment will also be successfully achieved during start-up and shut-down procedures. Furthermore, as the gas has been heated in the in-line burner, additional power is recovered when the gas leaving the tail gas treatment unit is expanded in the tail gas turbine.

As the expander is delivering increased power, less power is required from the additional means for providing power to the air compressor..

In one embodiment according to the production plant of the disclosure, the additional means for providing power to the air compressor is an electric motor.

In one embodiment according to the production plant of the disclosure, the additional means for providing power to the air compressor is a steam turbine and, optionally, the system further comprises a generator that can be provided power by the steam turbine or the tail gas expander and provide in turn power to the air compressor.

In one embodiment according to the production plant of the disclosure, the production plant further comprises an ammonia production system comprising:
∘ a hydrogen gas production system, in particular a water electrolyser;
∘ a supply for nitrogen gas;
∘ a mixing system for mixing the hydrogen gas and the nitrogen gas;
∘ a compressing system for compressing the hydrogen gas or the nitrogen gas or the mixed nitrogen and hydrogen gases obtained from the mixing system; and;
a Haber Bosch unit for producing ammonia by reacting the mixed and compressed nitrogen and hydrogen gases.

In one embodiment according to the production plant of the disclosure, the production plant further comprises a NOₓ gas compressor for compressing the gaseous NOₓ stream to a pressure P2 above P1, wherein the additional means for providing power to the air compressor or the tail gas expander can at least partly power the NOₓ gas compressor.

In one embodiment according to the production plant of the disclosure, the tail gas treatment unit is a De-NOx unit or a combined De-NOₓ/De-N₂O unit.

In one aspect of the disclosure, a method for the start-up or the shut-down of a nitric acid production according to the production plant of the disclosure, is disclosed. The method comprises the steps of:
- during the start-up:
   a) supplying pressurized air having a pressure P1 to the system;
   b) inducing a pressurized air flow in the system by operating the air compressor using external power;
   c) supplying heat to the ammonia converter such that the temperature in the ammonia converter ranges from 100 to 250 °C
   d) supplying the ammonia gas stream to the mixing apparatus, thereby producing the ammonia/air gas mixture;
   e) once the temperature in the ammonia converter has reached above 250 °C, stop supplying heat in step c).

The method is characterised in that it further comprises the steps of, during the start-up:
f) upon performing step b), start the in-line burner such that the gas leaving the tail gas outlet of the absorption tower is heated to a temperature ranging from 160 to 620 °C; and
g) upon performing step e), reduce the heating provided in step f) by the in-line burner such as to maintain a temperature for the tail gas entering the tail gas treatment unit ranging from 160 to 620 °C;
and, during the shut-down:
h) stop supplying ammonia to the ammonia converter; wherein the shut-down further comprises the steps of:
i) upon performing step h), start the in-line burner such as to maintain a temperature for the tail gas entering the tail gas treatment unit ranging from 160 to 620 °C; and
j) once the NOₓ emissions out of the absorption tower no longer decrease further for 15 to 30 minutes, stop performing the steps a), b) and i).

In one embodiment according to the method of the disclosure, the method is performed in a plant according to the plant of the disclosure comprising an electric motor.

In one embodiment according to the method of the disclosure, the method is performed in a plant according to the plant of the disclosure comprising a steam turbine and, optionally, a generator connected to the steam turbine or the tail gas expander, and the method further comprises the steps a) and b) also during the shut-down, and steps a) and b) during the shut-down are performed simultaneously with steps h) and i).

In one embodiment according to the method of the disclosure, the method is performed in a plant comprising an ammonia production system and heating in steps f) and i) is performed by fuelling the in-line burner with ammonia.

In one embodiment according to the method of the disclosure, the heating in steps f) and i) is performed by fuelling the in-line burner with green ammonia, the green ammonia having been produced from the production of hydrogen gas from water electrolysis, mixing of the hydrogen gas with nitrogen gas, compression to 140 to 290 bar and subsequent reaction in a Haber Bosch unit for producing ammonia.

In one embodiment according to the method of the disclosure, the method further comprises the step of compressing the gaseous NOₓ stream to a pressure P2 above P1.

In one embodiment according to the method of the disclosure, the tail gas treatment is performed in a De-NOₓ unit or a combined De-NOₓ/De-N₂O unit.

In one aspect of the disclosure, the use of the production plant according to the production plant of the disclosure for performing the method according to the method of the disclosure, is disclosed.

In one aspect of the disclosure, a method for revamping a production plant for producing nitric acid at reduced power consumption and reduced emissions comprising:
- an air compressor providing compressed air;
- a mixing apparatus, for mixing the compressed gas stream with an ammonia gas stream, to produce an ammonia/air gas mixture;
- an ammonia converter, operable at a pressure P1 above atmospheric pressure, for oxidising ammonia in the ammonia/air gas mixture, to produce a NOₓ gas/steam mixture comprising water and nitric oxide;
- a gas cooler/condenser downstream from the ammonia converter, to produce from the NOₓ gas/steam mixture an aqueous diluted nitric acid mixture and a gaseous NOₓ stream;
- an absorption tower, downstream from the gas cooler/condenser, for absorbing the NOₓ gases from the gaseous NOₓ stream in water, to produce a stream of nitric acid containing residual NOₓ gas and a tail gas comprising NOₓ gases, comprising an absorption tower tail gas outlet for evacuating the tail gas;
- a tail gas heater, positioned upstream from the gas cooler/condenser, for heating a tail gas stream with the heat generated inside the ammonia converter;
- a tail gas treatment unit located downstream from the tail gas heater;
- a tail gas expander for expanding the tail gas downstream from the tail gas treatment unit down to about atmospheric pressure; and
additional means for providing power to the air compressor; into a production plant according to the production plant of the disclosure, is disclosed. The method for revamping comprises the step of:
- adding an in-line burner located downstream from the absorption tower and upstream from the tail gas treatment unit for heating the tail gas leaving at the tail gas outlet of the absorption tower.

### List of figures

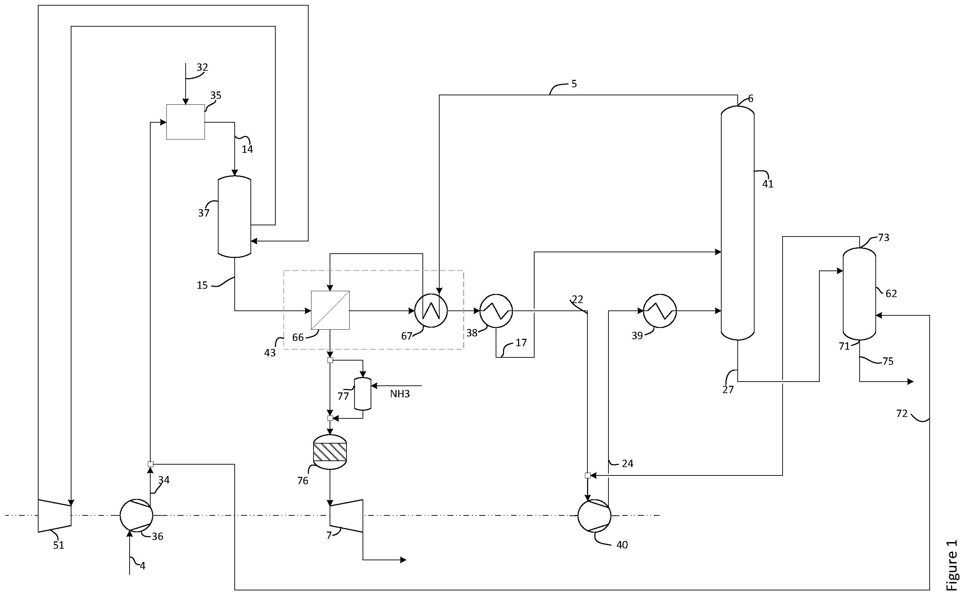

Figure 1 depicts a production plant according to the production plant of the disclosure.

### Detailed description

Throughout the description and claims of this specification, the words "comprise" and variations thereof mean "including but not limited to", and they are not intended to (and do not) exclude other moieties, additives, components, integers or steps. Throughout the description and claims of this disclosure, the singular encompasses the plural unless the context otherwise requires. In particular, where the indefinite article is used, the disclosure is to be understood as contemplating plurality as well as singularity, unless the context requires otherwise.

Features, integers, characteristics, compounds, chemical moieties, or groups described in conjunction with a particular aspect, embodiment or example of the disclosure are to be understood to be applicable to any other aspect, embodiment or example described herein unless incompatible therewith. All of the features disclosed in this disclosure (including the description, claims, abstract and drawing), and/or all of the steps of any method or process so disclosed, may be combined in any combination, except combinations where at least some of such features and/or steps are mutually exclusive. The disclosure is not restricted to the details of any foregoing embodiments. The disclosure extends to any novel one, or any novel combination, of the features disclosed in this disclosure (including the description, claims, abstract and drawing), or to any novel one, or any novel combination, of the steps of any method or process so disclosed.

The enumeration of numeric values by means of ranges of figures comprises all values and fractions in these ranges, as well as the cited end points. The terms "ranging from ... to ..." or "range from ... to ..." or "up to" or "between" as used when referring to a range for a measurable value, such as a parameter, an amount, a time period, and the like, is intended to include the limits associated to the range that is disclosed.

In one aspect of the disclosure, a production plant for producing nitric acid at reduced power consumption and reduced emissions. The production plant comprises an air compressor providing compressed air, a mixing apparatus, for mixing the compressed gas stream with an ammonia gas stream, to produce an ammonia/air gas mixture, an ammonia converter, operable at a pressure P1 above atmospheric pressure, for oxidising ammonia in the ammonia/air gas mixture, to produce a NOₓ gas/steam mixture comprising water and nitric oxide, a gas cooler/condenser downstream from the ammonia converter, to produce from the NOₓ gas/steam mixture an aqueous diluted nitric acid mixture and a gaseous NOₓ stream, an absorption tower, downstream from the gas cooler/condenser, for absorbing the NOₓ gases from the gaseous NOₓ stream in water, to produce a stream of nitric acid containing residual NOₓ gas and a tail gas comprising NOₓ gases, comprising an absorption tower tail gas outlet for evacuating the tail gas, a tail gas heater, positioned upstream from the gas cooler/condenser, for heating a tail gas stream with the heat generated inside the ammonia converter, a tail gas treatment unit located downstream from the tail gas heater, for treating NOₓ gases and nitrous oxide gases, a tail gas expander for expanding the tail gas downstream from the tail gas treatment unit down to about atmospheric pressure, the tail gas expander being suitable for providing power to the air compressor; and additional means for providing power the air compressor.

The production plant is characterised in that it further comprises an in-line fuelled burner located downstream from the absorption tower and upstream from the tail gas treatment unit for heating the gas upstream from the tail gas treatment unit.

As herein defined, the tail gas treatment unit is a unit for abating gases with regulated emission limits, in particular NOₓ and N₂O gases.

As herein defined air to be compressed by the compressor for producing compressed air is an air-containing stream, in particular air itself or a stream of tail gas being recirculated to either the ammonia converter or to the absorption tower for the absorption of the NOₓ gases. The person skilled in the art will recognise that, in order for the tail gas to act as a suitable air supply to the burner or the absorption tower, a supply of oxygen to the tail gas is required.

As defined herein, a compressor is any device suitable for pressurising a gas, that is any gas pressuring means, such as a gas compressor or a gas blower.

The inventor has realised that, even though the plant is not in operation and the temperature of the tail gas therefore is reduced compared to when NOₓ gases are being produced, if the gas leaving the absorption tower during the start-up or the shut-down is heated in an in-line burner before entering the tail treatment unit, tail gas treatment will also be successfully achieved during start-up and shut-down procedures. Furthermore, as the gas has been heated in the in-line burner, additional power is recovered when the gas leaving the tail gas treatment unit is expanded in the tail gas turbine. As the expander is delivering increased power, less power is required from the additional means for providing power to the air compressor.

Additional benefits associated with the use of an in-line burner include the possibility to control the heating rate of the equipment downstream from of the in-line burner, including the tail gas treatment unit. Consequently, the lifetime of the equipment and piping downstream from the in-line burner, and of the tail gas treatment unit, is increased.

In one embodiment according to the production plant of the disclosure, the additional means for providing power to the air compressor is an electric motor.

In the presence of an electric motor, the start-up of the plant, through activating the air compressor, can be achieved without relying, for example, upon a steam turbine, or a generator connected to a steam turbine or the tail gas expander, for empowering the air compressor.

In one embodiment according to the production plant of the disclosure, the the additional means for providing power to the air compressor is a steam turbine and, optionally, the system further comprises a generator that can be provided power by the steam turbine or the tail gas expander and provide in turn power to the air compressor.

Considering that steam is produced during nitric acid production, it can be valuable to recover this produced steam and to, at least partly, use this steam for running a steam turbine. Further, as the air compressor is partly supplied with power recovered from the tail gas expander, the steam turbine can consume less steam and, therefore, more steam can be exported and utilised externally. Alternatively, additional power recovered from the tail gas expander can be supplied to the generator, enabling it to produce additional electricity.

In one embodiment according to the production plant of the disclosure, the production plant further comprises an ammonia production system comprising a hydrogen gas production system, in particular a water electrolyser, a supply for nitrogen gas, a mixing system for mixing the hydrogen gas and the nitrogen gas, a compressing system for compressing the hydrogen gas or the nitrogen gas or the mixed nitrogen and hydrogen gases obtained from the mixing system, and a Haber Bosch unit for producing ammonia by reacting the mixed and compressed nitrogen and hydrogen gases.

In the presence of an ammonia production system, the in-line burner can be conveniently fuelled with ammonia and it is avoided that carbon emissions are released to the air. Indeed, the burning of ammonia to generate heat will not produce any carbon-containing gas and mostly water vapor and nitrogen gas that are harmless to the environment.

Therefore, it is preferred that the plant of the disclosure comprises an ammonia production system with a hydrogen gas production system with a water electrolyser, a supply for nitrogen gas, a mixing system for mixing the hydrogen gas and the nitrogen gas, a compressing system for compressing the hydrogen gas or the nitrogen gas or the mixed nitrogen and hydrogen gases obtained from the mixing system and a Haber Bosch unit for producing ammonia by reacting the mixed and compressed nitrogen and hydrogen gases. In this manner the fuel required for operating the in-line burner without generating carbon emissions, that is ammonia, can further be produced from the plant of the disclosure and one does not need to rely upon external ammonia supply.

Further, when hydrogen is produced through a water electrolyser, hydrogen is produced in the absence of carbon emissions.

In one embodiment according to the production plant of the disclosure, the production plant further comprises a NOₓ gas compressor for compressing the gaseous NOₓ stream to a pressure P2 above P1, wherein the additional means for providing power to the air compressor or the tail gas expander can at least partly power the NOₓ gas compressor.

The presence of a NOₓ gas compressor allows for a dual pressure nitric acid plant to be used and for the absorption of the NOₓ gases to be performed at a higher pressure. In the presence of an in-line burner, the additional power recovered upon expansion of the tail gas heated in the in-line burner can also at least partly be utilised in empowering the NOₓ compressor.

The person skilled in the art will understand that, in the event tail gas and oxygen are recirculated as a supply of air to either the ammonia converter or the absorption tower, in a dual pressure plant, because the tail gas is at a suitable pressure for being so recirculated, a single compressor is sufficient in the plant.

In one embodiment according to the production plant of the disclosure, the tail gas treatment unit is a De-NOx unit or a combined De-NOₓ/De-N₂O unit.

Considering the NOx and nitrous oxide gases are the predominant green-house gases produced during nitric acid production, it is of particular benefit to abate those gases before they are released to the atmosphere.

In particular, the treatment unit is a De-NOₓ treatment unit such as an SCR unit. An SCR unit provides the benefit that it is usually operated with ammonia as a reactant for abating NOx emissions, thereby minimising green-house emissions due to operating the tail gas treatment unit.

Alternatively, the treatment unit is a combined De-NOₓ/De-N₂O unit. In this system, the N₂O emissions are further reduced since there is additional abatement of N₂O, that is on top of the abatement practiced in the ammonia converter, or the presence of such De-N₂O unit allows for the absence of N₂O abatement in the ammonia converter. The combined De-NOₓ/De-N₂O can be either an SCR or NSCR unit. The benefits of an SCR unit are as stated above. The benefits of an NSCR include a more exothermic reaction in the treatment unit compared to the reaction in an SCR unit and, therefore, additional power recovery from the tail gas expander.

In one aspect of the disclosure, a method for the start-up or the shut-down of a nitric acid production according to the production plant of the disclosure, is disclosed. The method comprises the steps of, during the start-up, a) supplying pressurised air having a pressure P1 to the system; b) inducing a pressurised air flow in the system by operating the air compressor using external power; c) supplying heat to the ammonia converter such that the temperature in the ammonia converter ranges from 100 to 250 °C; d) supplying the ammonia gas stream to the mixing apparatus, thereby producing the ammonia/air gas mixture; and e) once the temperature in the ammonia converter has reached above 250 °C, stop supplying heat in step c), and, during the shut-down, h) stop supplying ammonia to the ammonia converter.

The method is characterised in that the start-up further comprises the steps of f) upon performing step b), start the in-line burner such that the gas leaving the tail gas outlet of the absorption tower is heated to a temperature ranging from 160 to 620 °C; and g) upon performing step e), reduce the heating provided in step f) by the in-line burner such as to maintain a temperature for the tail gas entering the tail gas treatment unit ranging from 160 to 620 °C.

The method is further characterised in that the shut-down further comprises the steps of i) upon performing step h), start the in-line burner such as to maintain a temperature for the tail gas entering the tail gas treatment unit ranging from 160 to 620 °C; and j) once the NOₓ emissions out of the absorption tower no longer decrease further for 15 to 30 minutes, stop performing the steps a), b) and i).

The inventor has realised that, even though the plant is not in operation and the temperature of the tail gas therefore is reduced compared to when NOₓ gases are being produced, if the gas leaving the absorption tower during the start-up or the shut-down is heated in an in-line burner to 160 to 620 °C before entering the tail gas treatment unit and according to steps f) and i), tail gas treatment will also be successfully achieved during start-up and shut-down procedures respectively. Furthermore, as the gas has been heated in the in-line burner to 160 to 620 °C, additional power is recovered when the gas leaving the tail gas treatment unit is expanded in the tail gas turbine. As the expander is delivering increased power, during step b), less power is required from the additional means for providing power to the air compressor..

Additional benefits associated with the use of an in-line burner in steps f), g) and i) include the possibility to control the heating rate of the equipment downstream from of the in-line burner, including the tail gas treatment unit. Consequently, the lifetime of the equipment and piping downstream from the in-line burner, and of the tail gas treatment, unit is increased.

In one embodiment according to the method of the disclosure, the method is performed in a plant according to the plant of the disclosure comprising an electric motor.

By activating the air compressor with an electric motor, one does not have to rely upon a steam turbine, or a generator connected to the steam turbine or the tail gas expander, for empowering the air compressor.

In one embodiment according to the method of the disclosure, the method is performed in a plant according to the plant of the disclosure comprising a steam turbine and, optionally, a generator that can be provided power by the steam turbine or the tail gas expander, and the method further comprises the steps a) and b) also during the shut-down, and steps a) and b) during the shut-down are performed simultaneously with steps h) and i).

Considering that steam is produced during nitric acid production, it can be valuable to recover this produced steam and to, at least partly, use this steam for running a steam turbine. Further, as the air compressor in step b) is partly supplied with power recovered from the tail gas expander, the steam turbine can consume less steam and, therefore, more steam can be exported and utilised externally. Alternatively, additional power recovered from the tail gas expander can be supplied to the generator, enabling it to produce additional electricity.

In one embodiment according to the method of the disclosure, the method is performed in a plant comprising an ammonia production system and the heating in steps f) and i) is performed by fuelling the in-line burner with ammonia.

By fuelling the in-line burner with ammonia, it is avoided that carbon emissions are released to the air. Indeed, the burning of ammonia to generate heat will not produce any carbon-containing gas and mostly water vapor and nitrogen gas that are harmless to the environment.

In one embodiment according to the method of the disclosure, the heating in steps f) and i) is performed by fuelling the in-line burner with green ammonia, the green ammonia having been produced from the production of hydrogen gas from water electrolysis, mixing of the hydrogen gas with nitrogen gas, compression to 140 to 290 bar and subsequent reaction in a Haber Bosch unit for producing ammonia.

It is preferred that ammonia is the fuel supplied to the in-line burner and that the plant of the disclosure comprises an ammonia production system comprising a hydrogen gas production system, in particular a water electrolyser, a supply for nitrogen gas, a mixing system for mixing the hydrogen gas and the nitrogen gas, a compressing system for compressing the hydrogen gas or the nitrogen gas or the mixed nitrogen and hydrogen gases obtained from the mixing system and a Haber Bosch unit for producing ammonia by reacting the mixed and compressed nitrogen and hydrogen gases. In this manner the fuel required for operating the in-line burner without generating carbon emissions, that is ammonia, can further be produced from the plant of the disclosure and one does not need to rely upon external ammonia supply. Further, when hydrogen is produced through a water electrolyser, hydrogen is produced in the absence of carbon emissions.

In one embodiment according to the method of the disclosure, the method further comprises the step of compressing the gaseous NOₓ stream to a pressure P2 above P1.

By compressing the gaseous NOₓ stream to a pressure P2 above P1, the absorption of the NOₓ gases to be performed at a higher pressure. In the presence of an in-line burner, similarly to the described above with respect to the air compressor, the additional power recovered upon expansion of the tail gas heated in the in-line burner can also at least partly be utilised in empowering the NOₓ compressor.

In one embodiment according to the method of the disclosure, the tail gas treatment is performed in a De-NOx unit or a combined De-NOₓ/De-N₂O unit.

Considering the NOx and nitrous oxide gases are the predominant green-house gases produced during nitric acid production, it is of particular benefit to abate those gases before they are released to the atmosphere.

In particular, the treatment unit is a De-NOₓ treatment unit such as an SCR unit. An SCR unit provides the benefit that it is usually operated with ammonia as a reactant for abating NOx emissions, thereby minimising green-house emissions due to operating the tail gas treatment unit.

Alternatively, the treatment unit is a combined De-NOₓ/De-N₂O unit. In this system, the N₂O emissions are further reduced since there is additional abatement of N₂O, that is on top of the abatement practiced in the ammonia converter, or the presence of such De-N₂O unit allows for the absence of N₂O abatement in the ammonia converter. The combined De-NOₓ/De-N₂O can be either an SCR or NSCR unit. The benefits of an SCR unit are as stated above. The benefits of an NSCR include a more exothermic reaction in the treatment unit compared to the reaction in an SCR unit and, therefore, additional power recovery from the tail gas expander.

In one aspect of the disclosure, the use of the production plant according to the production plant of the disclosure for performing the method according to the method of the disclosure, is disclosed.

In one aspect of the disclosure, a method for revamping a production plant for producing nitric acid at reduced power consumption and reduced emissions comprising an air compressor providing compressed air; a mixing apparatus, for mixing the compressed gas stream with an ammonia gas stream, to produce an ammonia/air gas mixture; an ammonia converter, operable at a pressure P1 above atmospheric pressure, for oxidising ammonia in the ammonia/air gas mixture, to produce a NOₓ gas/steam mixture comprising water and nitric oxide; a gas cooler/condenser downstream from the ammonia converter, to produce from the NOₓ gas/steam an aqueous diluted nitric acid mixture and a gaseous NOₓ stream; an absorption tower, downstream from the gas cooler/condenser, for absorbing the NOₓ gases from the gaseous NOₓ stream in water, to produce a stream of nitric acid containing residual NOₓ gas and a tail gas comprising NOₓ gases, comprising an absorption tower tail gas outlet for evacuating the tail gas; a tail gas heater, positioned upstream from the gas cooler/condenser, for heating a tail gas stream with the heat generated inside the ammonia converter; a tail gas treatment unit located downstream from the tail gas heater; a tail gas expander for expanding the tail gas downstream from the tail gas treatment unit down to about atmospheric pressure, the tail gas expander being suitable for providing power to the air compressor; and additional means for providing power the air compressor;, into a production plant according to the production plant of the disclosure, is disclosed. The method for revamping comprises the step of adding an in-line burner located downstream from the absorption tower and upstream from the tail gas treatment unit for heating the tail gas leaving at the tail gas outlet of the absorption tower.

### Example

Reference is made to Figure 1. Air (4) was compressed in an air compressor (36), partially powered by a steam turbine (51) and a tail gas expander (7), thereby providing a compressed air stream (34). Part of the compressed air stream (34), that is the so-called primary air, was mixed with gaseous ammonia (32) in a mixing unit (35), thereby providing a mixed ammonia/compressed air stream (14) that was fed to an ammonia converter (37). In the ammonia converter oxidation of ammonia in the ammonia/compressed air stream (14) was performed thereby providing nitric oxide and steam. The heat produced from the oxidation of ammonia in the ammonia converter (37) was used for producing steam that was used in empowering the steam turbine (51). The nitric oxide-containing stream (15) was cooled down, first in a heat exchange system (43) for heating tail gas and comprising a heat exchanger (67) and tail gas heater (66), and subsequently in first a cooler condenser (38). From the cooler condenser (38) were obtained a condensed liquid nitric acid stream (17) and a cooled NOₓ-containing gas stream (22) that was compressed in an NOₓ gas compressor (40), thereby providing a compressed NOₓ gas stream (24). The NOₓ gas compressor (40) was partially powered by a steam turbine (51) and a tail gas expander (7). The compressed NOₓ gas stream (24) was treated in a second cooler condenser (39). Both the cooled gas leaving the cooler condenser (39) and the liquid nitric acid stream (17) were sent off to an absorption tower (41) in which the NOₓ gases from the compressed NOₓ gas stream (24) were absorbed, thereby providing a raw nitric acid stream (27) at the bottom of the absorption tower (41) and a tail gas (5), collected at an outlet (6) at the top of the absorption tower (41). The raw nitric stream (27) was treated in the bleacher (62) fed by the remaining part of the compressed air stream (34), the so-called secondary air, thereby providing commercial grade nitric acid (75) and bleaching off-gases (73) that were sent off for compression upstream from the NOₓ gas compressor (40). The tail gas (5) was heated by exchanging heat with the nitric oxide-containing stream (15), first by heat exchange in the heat exchanger (67) and secondly in the tail gas heater (66). The thereby heated tail gas then was treated in a tail gas treatment unit (76) and subsequently expanded to atmospheric pressure in the tail gas turbine (7). During the start-up, gaseous ammonia (32) was not fed to the mixing unit (35) and during the shut-down the feed of gaseous ammonia (32) to the mixing unit was stopped. During the start-up, pressurised air was supplied to the entire production plant, then pressurised air flow was induced in the production plant by actually operating the air compressor (36) using external power, after which heat was supplied to the ammonia converter such that the temperature in the ammonia converter ranges from 100 to 250 °C, gaseous ammonia gas (32) then was supplied to the mixing apparatus (35) and, once the temperature in the ammonia converter (37) had reached above 250 °C, the heat supply to the ammonia converter (37) was stopped. Furthermore, during the start-up and as the air flow was induced through running the air compressor (36), an in-line burner (77) was started, such as to heat the gas (5) leaving at the outlet (6) to a temperature ranging from 160 to 620 °C. Upon stopping the heat supply to the ammonia converter (37), the in-line burner was gradually turned down such as to maintain a temperature for the gas (5) leaving at the outlet (6) to a temperature ranging from 160 to 620 °C. In addition, during the shut-down, as gaseous ammonia (32) was stopped being supplied to the mixing unit (35), the in-line burner (77) was also started, such as to heat the gas (5) leaving at the outlet (6) to a temperature ranging from 160 to 620 °C, and once the NOx emissions out of the absorption tower no longer decreased further for 15 to 30 minutes, the feeding of air (4) to the air compressor (36) was stopped, the air compressor (36) was stopped and the in-line burner (77) was stopped. The in-line burner (77) was fuelled with gaseous ammonia. For the avoidance of doubt, the absence of feeding of gaseous ammonia (32) to the mixing unit (35) means that no ammonia is supplied to the ammonia converter (37). Conversely, the feeding of gaseous ammonia (32) to the mixing unit (35) means that ammonia is supplied to the ammonia converter (37).

## Claims

1. A production plant for producing nitric acid at reduced power consumption and reduced emissions comprising:
• an air compressor providing compressed air;
• a mixing apparatus, for mixing the compressed gas stream with an ammonia gas stream, to produce an ammonia/air gas mixture;
• an ammonia converter, operable at a pressure P1 above atmospheric pressure, for oxidising ammonia in the ammonia/air gas mixture, to produce a NOx gas/steam mixture comprising water and nitric oxide;
• a gas cooler/condenser downstream from the ammonia converter, to produce from the NOx gas/steam mixture an aqueous diluted nitric acid mixture and a gaseous NOx stream;
• an absorption tower, downstream from the gas cooler/condenser, for absorbing NOx gases from the gaseous NOx stream in water, to produce a stream of nitric acid containing residual NOx gas and a tail gas comprising NOx gases, comprising an absorption tower tail gas outlet for evacuating the tail gas;
• a tail gas heater, positioned upstream from the gas cooler/condenser, for heating a tail gas stream with the heat generated inside the ammonia converter;
• a tail gas treatment unit located downstream the tail gas heater, for treating NOx gases and nitrous oxide gases;
• a tail gas expander for expanding the tail gas downstream of the tail gas treatment unit down to about atmospheric pressure, the tail gas expander being suitable for providing power to the air compressor; and
• additional means for providing power the air compressor;
**characterised in that** the production plant further comprises:
• an in-line fuelled burner located downstream from the absorption tower and upstream from the tail gas treatment unit for heating the gas upstream the tail gas treatment unit.

2. The production plant according to claim 1, wherein the additional means for providing power to the air compressor is an electric motor.

3. The production plant according to claim 1, wherein the additional means for providing power to the air compressor is a steam turbine, and wherein, optionally, the system further comprises a generator that can be provided power by the steam turbine or the tail gas expander and provide in turn power to the air compressor.

4. The production plant according to any one of claims 1 to 3, wherein the plant further comprises an ammonia production system comprising:
o a hydrogen gas production system, in particular a water electrolyser;
o a supply for nitrogen gas;
o a mixing system for mixing the hydrogen gas and the nitrogen gas;
o a compressing system for compressing the hydrogen gas or the nitrogen gas or the mixed nitrogen and hydrogen gases obtained from the mixing system; and;
a Haber Bosch unit for producing ammonia by reacting the mixed and compressed nitrogen and hydrogen gases.

5. The production plant according to any one of claims 1 to 4, further comprising a NOx gas compressor for compressing the gaseous NOx stream to a pressure P2 above P1, wherein the additional means for providing power to the air compressor or the tail gas expander can at least partly power the NOx gas compressor.

6. The production plant according to any one of claims 1 to 4, wherein the tail gas treatment unit is a De-NOx unit or a combined De-NOx/De-N2O unit.

7. A method for the start-up or shut-down of a nitric acid production according to any one of claims 1 to 6, comprising the steps of:
• during the start-up:
a) supplying pressurised air having a pressure P1 to the system;
b) inducing a pressurised air flow in the system by operating the air compressor using external power;
c) supplying heat to the ammonia converter such that the temperature in the ammonia converter ranges from 100 to 250 °C
d) supplying the ammonia gas stream to the mixing apparatus, thereby producing the ammonia/air gas mixture;
e) once the temperature in the ammonia converter has reached above 250 °C, stop supplying heat in step c);
wherein the start-up further comprises the steps of:
f) upon performing step b), start the in-line burner such that the gas leaving the tail gas outlet of the absorption tower is heated to a temperature ranging from 160 to 620 °C; and
g) upon performing step e), reduce the heating provided in step f) by the in-line burner such as to maintain a temperature for the tail gas entering the tail gas treatment unit ranging from 160 to 620 °C;
and
• during the shut-down:
h) stop supplying ammonia to the ammonia converter;
wherein the shut-down further comprises the steps of:
i) upon performing step h), start the in-line burner such as to maintain a temperature for the tail gas entering the tail gas treatment unit ranging from 160 to 620 °C; and
j) once the NOx emissions out of the absorption tower no longer decrease further for 15 to 30 minutes, stop performing the steps a), b) and i).

8. The method according to claim 7, in a production plant according to claim 2.

9. The method according to claim 7, in a production plant according to claim 3, further comprising the steps a) and b) also during the shut-down, and wherein steps a) and b) during the shut-down are performed simultaneously with steps h) and i).

10. The method according to any one of claims 7 to 9, wherein the method is performed in a plant comprising an ammonia production system and the heating in steps f) and i) is performed by fuelling the in-line burner with ammonia.

11. The method according to claim 10, wherein the heating in steps f) and i) is performed by fuelling the in-line burner with green ammonia, the green ammonia having been produced from the production of hydrogen gas from water electrolysis, mixing of the hydrogen gas with nitrogen gas, compression to 140 to 290 bar and subsequent reaction in a Haber Bosch unit for producing ammonia.

12. The method according to any one of claims 7 to 17, further comprising the step of compressing the gaseous NOx stream to a pressure P2 above P1.

13. The method according to any one of claims 7 to 12, wherein the tail gas treatment is performed in is a De-NOx unit or a combined De-NOx/De-N2O unit.

14. The use of the production plant according to any one of claims 1 to 6 for performing the method according to any one of claims 7 to 13.

15. A method for revamping a production plant for producing nitric acid at reduced power consumption and reduced emissions comprising:
• an air compressor providing compressed air;
• a mixing apparatus, for mixing the compressed gas stream with an ammonia gas stream, to produce an ammonia/air gas mixture;
• an ammonia converter, operable at a pressure P1 above atmospheric pressure, for oxidising ammonia in the ammonia/air gas mixture, to produce a NOx gas/steam mixture comprising water and nitric oxide;
• a gas cooler/condenser downstream from the ammonia converter, to produce from the NOx gas/steam mixture an aqueous diluted nitric acid mixture and a gaseous NOx stream;
• an absorption tower, downstream from the gas cooler/condenser, for absorbing the NOx gases from the gaseous NOx stream in water, to produce a stream of nitric acid containing residual NOx gas and a tail gas comprising NOx gases, comprising an absorption tower tail gas outlet for evacuating the tail gas;
• a tail gas heater, positioned upstream from the gas cooler/condenser, for heating a tail gas stream with the heat generated inside the ammonia converter;
• a tail gas treatment unit located downstream from the tail gas heater, for abating NOx gases and nitrous oxide gases;
• a tail gas expander for expanding the tail gas downstream from the tail gas treatment unit down to about atmospheric pressure, the tail gas expander being suitable for providing power to the air compressor; and
• additional means for providing power the air compressor;
into a production plant according to any one of claims 1 to 6, wherein the method comprises the step of:
• adding an in-line burner located downstream from the absorption tower and upstream from the tail gas treatment unit for heating the tail gas leaving at the tail gas outlet of the absorption tower.
